# EUROPEAN PATENT SPECIFICATION

(11) **EP 3 006 400 B1**
(45) Date of publication and mention of the grant of the patent: **13.12.2017**
(21) Application number: 14188350.4
(22) Date of filing: 09.10.2014
(51) Int. Cl.: C01C 1/02, B01D 61/44, C01C 1/04, C01D 7/18, C25B 1/26, C01B 7/05

(54) **PROCESS FOR PRODUCING AMMONIA**
VERFAHREN ZUR HERSTELLUNG VON AMMONIAK
PROCÉDÉ DE PRODUCTION D'AMMONIAC

(43) Date of publication of application: 13.04.2016
(73) Proprietor: Solvay SA, 1120 Bruxelles (BE)
(72) Inventor: Asensio, Salvador, 39300 Torrelavega (ES); Diaz, Antonio, 39679 Cantabria (ES); Alonso, Rebeca, 39009 Santander (ES); Hurtado, Ines, 1040 Brussels (BE); Vandervorst, Eric, 7850 Enghien (BE)
(74) Representative: Teipel, Stephan

(56) References cited:
- WO-A1-2010/057261
- CN-A- 102 050 470
- US-A- 2 209 681

## Description

The present invention relates to a process for producing ammonia from an aqueous solution containing ammonium chloride using an electrodialyzer cellstack.

The major industrial process for the production of synthetic sodium carbonate is the soda ash process, also known as SOLVAY process (ammonia-soda process) or, in a modified embodiment as HOU process. This process consists in treating an ammoniacal brine with gas containing carbon dioxide. From the solution sodium bicarbonate precipitates, is recovered and calcinated to obtain sodium carbonate. The mother liquid obtained from the sodium bicarbonate separation contains ammonium chloride and sodium chloride. The mother liquid is either then reacted with calcium oxide or calcium hydroxide to obtain ammonia which is recycled back to the initial brine solution in the ammonia-soda process or treated to precipitate solid NH₄Cl in the HOU process

The known soda ash process has proved to consume large amounts of energy among others for the recycling of the ammonia. Furthermore, there is still a need for improvement of the recycling of ammonia and the reduction of undesired byproducts of the process, such as calcium chloride.

The electrolysis of ammonium chloride for the recovery or production of chlorine or ammonia or both is disclosed in US 2,209,681. In this method an electrolyzing current is passed through an electrolytic cell having an aqueous electrolyte containing ammonium and sodium chloride, the concentration of the sodium chloride being at least equal to that of the ammonium chloride. This process presents several disadvantages and is not used.

A process for obtaining chemicals from the waste process water of the soda ash process, and in particular, from the mother liquid obtained after sodium bicarbonate filtration and containing ammonium chloride and sodium chloride, is described in Austrian Patent No. AT 96/01330. In this process the sodium and ammonium ions are separated from the chloride ions, and the ions so separated, together with the relevant counter-ions of the water dissociation are converted into sodium hydroxide, ammonium hydroxide, ammonia and hydrochloric acid, respectfully. The separation of the sodium and ammonium ions from the chloride ions is conducted by electrodialysis. The electrodialysis is conducted using at least three chambers that are separated from each other by one monopolar anionic selective membrane and one monopolar cationic selective membrane, themselves being separated by one bipolar membrane from the respective next section. In an alternative embodiment it is described that the cationic selective membrane may be replaced with an anionic selective membrane to obtain one flow containing hydrochloric acid and a second flow containing ammonium hydroxide, sodium hydroxide and residues of ammonium chloride and sodium chloride. According to the authors of this document it was found that it is possible to convert up to 90 % of the salts in respective acids and bases.

There is still a need for improving the known processes for recycling or even avoiding waste products in the soda ash process. In particular it would be desirable to improve the conversion rate in the recycling of ammonia from the mother liquid after sodium bicarbonate filtration. The present invention aims to solve these and other problems.

The present inventors have found that the yield of ammonia obtained in an electrodialyzing process can be significantly increased by maintaining the pH in the base chamber of an electrodializer within a certain high range of equal to or above 10.0.

Consequently, the present invention relates to a process for producing ammonia, comprising the steps of feeding an aqueous solution containing ammonium chloride into at least one base chamber of an electrodialyzer cellstack and obtaining an outlet liquid containing ammonia from the at least one base chamber of the electrodialyzer cellstack, characterized in that the pH in the base chamber(s) is maintained equal to or above 10.0.

Electrodialysis is a technique that consists in combining, within a set of adjoining compartments, bipolar ion-exchange membranes with anionic and/or cationic ion-exchange membranes. The anionic membranes are ion-exchange membranes that are permeable to anions and, ideally, impermeable to cations. The cationic membranes are themselves permeable to cations and impermeable to anions. A bipolar membrane is an ion-exchange membrane comprising a cationic face and an anionic face. Such membranes may be produced by joining a cationic membrane and an anionic membrane. The bipolar membrane may for example be produced by the process described in WO 01/79335 in the name of SOLVAY.

Within the bipolar membrane, under the action of a sufficient local electric field, the dissociation of the water that has penetrated therein to its H⁺ and OH⁻ions takes places, which ions then migrate on both sides of this membrane. There is therefore acidification in one of the compartments adjacent to the bipolar membrane and alkalinization in the other adjacent compartment. Successive bipolar membranes are separated by cationic or anionic monopolar membranes. When the electrodialyzer only possesses bipolar membranes and one type of monopolar membranes (cationic or anionic), they are said to have two (types of) compartments. The electrodialyzer used in the process of the present invention possesses only bipolar and anionic membranes.

The compartment located between the anionic face of the bipolar membrane and the anionic membrane constitutes a base chamber. In this compartment there is a supply of OH⁻ ions originating from the bipolar membrane. In the process of the present invention the base chamber is fed with the solution containing ammonium chloride. The OH⁻ ions supplied from the bipolar membrane will react with the ammonium cations to yield the desired ammonia and water.

The present inventors found that the conversion of the ammonium chloride into ammonia in the base chamber and thus the yield of the present process depends on the pH in the base chamber being measured at the outlet of the chamber. It was found that if the pH in the base chamber is below 10.0 less than 90% of the ammonium chloride is converted into the desired ammonia. Increasing the pH in the base chamber to a value equal to or above 10.0 significantly increases the conversion of the ammonium chloride to ammonia whereby a yield of nearly 100% can be obtained. This is an important advantage over the prior art process as for example described in AT 96/01330 because the obtained outlet liquid is substantially free of residual ammonium chloride and therefore can for example easily and economically be reintroduced into the soda ash process without the requirement of further purification.

Furthermore this invention allows a reduction of capital expenditure for the production of soda ash, as distillation sector in SOLVAY process and ammonium chloride crystallization sector in HOU process can be suppressed.

Preferably the pH in the base chamber(s) (as measured at the outlet of the chamber) is maintained equal to or above 10.3, more preferably in the range between 10.3 and 12.0, even more preferably in the range between 10.3 and 11.5, such as in the range between 10.4 and 11.0, and most preferably at about 10.6.

The pH in the base chamber depends on the pH of the aqueous solution being fed into the chamber and the amount of OH- supplied from the bipolar membrane. Thus, the pH can be maintained within the desired range or at the desired value by controlling the flow rate of the feed solution and the current density applied to the electrolyzer cellstack.

The compartment located between the cationic face of the bipolar membrane and the anionic membrane constitutes an acid chamber. In this compartment there is a supply of H⁺ ions originating from the bipolar membrane and Cl⁻ ions crossing the anionic membrane. The acid chamber may for example be fed with water or diluted aqueous hydrochloric acid solution in which case the H⁺ ions and the Cl⁻ ions supplied by the membranes form hydrochloric acid which is obtained as an outlet liquid from the acid chamber.

In one embodiment the electrodialyzer cellstack used in the process of the present invention comprises at least four chambers being separated from each other by alternating bipolar and anionic membranes. Preferably, each anionic membrane separates a base chamber from an acid chamber.

On an industrial scale it is, however, preferred that the electrodialyzer cellstack comprises a plurality of alternating base chambers and acid chambers being separated from each other by a plurality of alternating bipolar and anionic membranes. For example a cellstack can be composed of a succession of acid and base chambers limited by successive anionic and bipolar membranes and separators in between the membranes. These separators are provided with the relevant entry and exit ports for the feed and removal of the various solutions. In such construction, each anionic or bipolar membrane has one face in a base chamber and the other face in an acid chamber.

The electrodialysis cellstack is closed at both sides with electrode elements which preferably contain the electrodes and degassing chambers. The electrodes may be connected with flexible electric feeders to a current rectifier.

The whole electrodialysis cellstack may be compressed by two metallic endplates and a tightening system to assure complete external and internal tightness.

The concentration of ammonium chloride in the aqueous feed solution is not particularly limited. In a preferred embodiment the feed solution comprises at least 100 g/l, preferably at least 130 g/l and more preferably at least 160 g/l ammonium chloride.

The aqueous feed solution containing ammonium chloride may contain other components. In a preferred embodiment the solution additionally contains sodium chloride. In this case the aqueous feed solution can for example be the mother liquid obtained after sodium bicarbonate filtration in a soda ash process.

The concentration of the sodium chloride in the aqueous feed solution is not particularly limited. In a preferred embodiment, the aqueous feed solution may comprise at least 40 g/l, preferably at least 50 g/l and more preferably at least 60 g/l sodium chloride.

An advantage of the process of the present invention over the prior art process described in AT 96/01330 is that the outlet liquid containing ammonia is substantially free of ammonium chloride. Furthermore, contrary to the process described in AT 96/01330 the process of the present invention does not yield any sodium hydroxide. Therefore, the outlet liquid containing ammonia is substantially free or even free of sodium hydroxide. This makes it possible to easily introduce the ammonia from the outlet liquid into a soda ash process.

In an advantageous embodiment of the present invention the process comprises the further step of dissolving sodium chloride in the outlet liquid containing ammonia and non-converted sodium chloride and introducing the thus obtained ammonia brine into the soda ash process.

Alternatively, the outlet liquid containing ammonia can be treated to recuperate gaseous ammonia which can either be introduced into the soda ash process, used in other processes or sold. Preferably, the ammonia is introduced into the soda ash process.

In a further embodiment the process of the invention comprises the further step of obtaining an outlet liquid containing hydrochloric acid from the acid chamber. The hydrochloric acid can also either be sold, used in other processes or for example be reacted with calcium carbonate (limestone) to produce carbon dioxide. The thus obtained carbon dioxide can be introduced in the soda ash process. If required additional carbon dioxide can be added from external sources, such as Steam generators.

In a further embodiment the present invention relates to a process for producing sodium carbonate by a soda ash process, comprising the step of producing ammonia by the above described process.

In a preferred embodiment of this process, the produced ammonia is re-introduced into the soda ash process, optionally after dissolving sodium chloride in the outlet liquid containing ammonia and non-converted sodium chloride. Thus, the ammonia re-introduced into the soda ash process can be for example the ammonia contained in the outlet liquid (in which case the outlet liquid is re-introduced into the soda ash process), gaseous ammonia recaptured from the outlet liquid or ammonia brine obtained after dissolving the sodium chloride in the outlet liquid containing ammonia and non-converted sodium chloride.

In a further embodiment of this process the hydrochloric acid produced in the acid chamber is reacted with limestone to obtain carbon dioxide which then preferably may be re-introduced into the soda ash process, optionally together with additional carbon dioxide from external sources, such as Steam generators.

In comparison to the conventional SOLVAY process the recovery of ammonia by the process of the present invention not only results in substantially 100% ammonia recovery but additionally allows to increase the NaCl yield in the soda ash process from 75% to nearly 100%.

Another advantage of this invention is the reduction of effluents generated in both SOLVAY and HOU process.

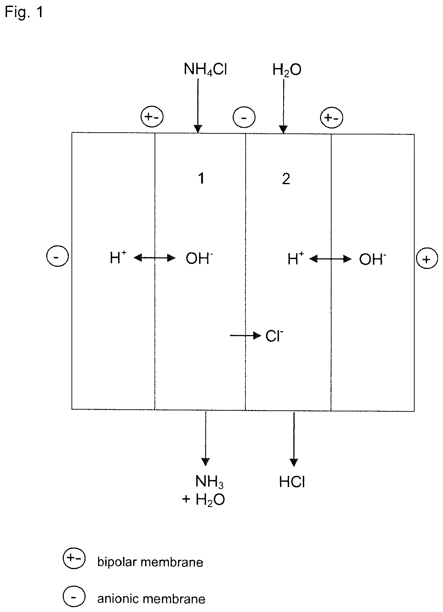

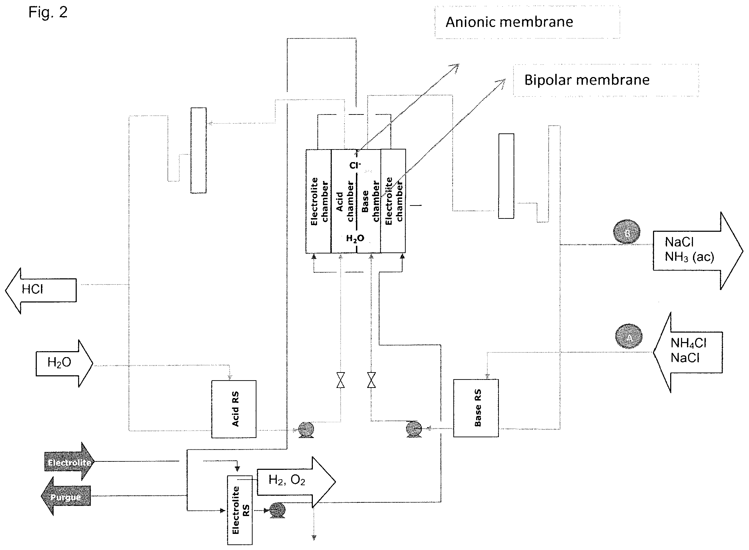

The present invention will now be explained with reference to the attached figures. Figure 1 shows schematically the function of the electrodialyzer in the process of the present invention and figure 2 shows the integration of the electrodialyzer cellstack in the general process.

In figure 1 the base chamber 1 is separated from the acid chamber 2 by an anionic membrane. Each chamber has a bipolar membrane opposite to the anionic membrane. Under an electric field water is split in the bipolar membranes generating H⁺ and OH⁻ ions. In the base chamber 1 the OH⁻ ions react with the ammonium chloride being fed as an aqueous solution into this chamber thereby generating an outlet liquid containing ammonia. The Cl⁻ ions from the ammonium chloride cross the anionic membrane into the acid chamber where they form hydrochloric acid together with the H⁺ ions generated in the bipolar membrane of the acid chamber.

Figure 2 shows an example for an integration of the electrodialyzer cellstack in a general process.

The electrodialyzer cellstack is fed by two circulation circuits, a basic and an acid circuit.

The basic circuit feeds all the base chambers of the cellstack in parallel. The conversion of NH₄⁺ occurs by passing through the cellstack. The concentration of the circuit is maintained constant by adding a solution of NH₄Cl/NaCl. At the outlet of the cellstack the solution is substantially free of NH₄⁺. There will be a purge containing mainly NaCl and dissolved ammonia which can be re-used in the general process.

The acid circuit feeds all the acid chambers of the cellstack in parallel. The concentration of HCl increases by passing through the cellstack. The concentration of the circuit is maintained constant by adding water. The overflow of the circuit is the HCl production that can be used or treated in other stages of the general process.

As feed for the base circuit for example the mother liquid obtained after sodium bicarbonate filtration in a soda ash process may be used. Alternatively, this mother liquid may be pre-treated to remove volatile ammonia and carbon dioxide.

The above described process has the advantages of reductions of effluents, simplification of the soda ash process, optimization of raw materials consumption and optimization of energy consumption in the soda ash process.

### Example 1

The base chambers of an electrodialysis cellstack comprising bipolar membranes and anionic membranes were fed with the mother liquid obtained after sodium bicarbonate filtration from a soda ash plant. The liquid contained 170 g/l ammonium chloride and 70 g/l sodium chloride as well as other minor components. The temperature in the electrodialysis cellstack was set to 50°C and a current density of 1 kA/m² was applied. The pH of the base chamber was measured at the outlet of the chamber and was maintained at pH 10.6.

The ammonium chloride concentration in the outlet liquid of the base chamber was 2.6 g/l. Thus the conversion of ammonium chloride to ammonia was 98.5%.

### Example 2 (comparative)

Example 1 was repeated but the pH in the base chamber was maintained at 9.8.

The ammonium chloride concentration in the outlet liquid from the base chamber was 23 g/l. Thus, at a pH below 10 the conversion of ammonium chloride to ammonia decreased to 86.5%.

## Claims

1. Process for producing ammonia, comprising the steps of feeding an aqueous solution containing ammonium chloride into at least one base chamber of an electrodialyzer cellstack and obtaining an outlet liquid containing ammonia from the at least one base chamber of the electrodialyzer cellstack, **characterized in that** the pH in the base chamber(s) is maintained equal to or above 10.0.

2. Process according to claim 1, **characterized in that** the pH in the base chamber(s) is maintained equal to or above 10.3, preferably in the range between 10.3 and 12.0.

3. Process according to one of the preceding claims, wherein the electrodialyzer cellstack comprises at least four chambers being separated from each other by alternating bipolar and anionic membranes.

4. Process according to claim 3, wherein each anionic membrane separates a base chamber from an acid chamber.

5. Process according to claim 4, comprising the further step of obtaining an outlet liquid containing hydrochloric acid from the acid chamber.

6. Process according to one of the preceding claims, wherein the aqueous solution containing ammonium chloride additionally contains sodium chloride.

7. Process according to one of the preceding claims, wherein the aqueous solution containing ammonium chloride is the mother liquid obtained after sodium bicarbonate filtration in a soda ash process.

8. Process according to one of the preceding claims, comprising the further step of introducing the ammonia from the outlet liquid into a soda ash process.

9. Process according to claim 8, comprising the further step of dissolving sodium chloride in the outlet liquid containing ammonia and non-converted sodium chloride and introducing the thus obtained ammonia brine into a soda ash process.

10. Process according to any of claims 5 to 9, comprising the further step of reacting the hydrochloric acid produced in the acid chamber with limestone to obtain carbon dioxide.

11. Process according to claim 10, wherein the carbon dioxide is introduced into a soda ash process, optionally together with additional carbon dioxide from external sources.

12. Process for producing sodium carbonate by a soda ash process, comprising the step of producing ammonia by the process according to any of the claims 1 to 7.

13. Process according to claim 12, wherein the produced ammonia is re-introduced into the soda ash process, optionally after dissolving sodium chloride in the outlet liquid containing ammonia and non-converted sodium chloride.

14. Process according to claim 12 or 13, wherein the hydrochloric acid produced in the acid chamber is reacted with limestone to obtain carbon dioxide.

15. Process according to claim 14, wherein the carbon dioxide is re-introduced into the soda ash process, optionally together with additional carbon dioxide form external sources.

## Patentansprüche

1. Verfahren zur Herstellung von Ammoniak, umfassend die Schritte des Einspeisens einer wässrigen Lösung, die Ammoniumchlorid enthält, in mindestens eine Basenkammer eines Elektrodialyse-Zellstapels sowie des Erhaltens einer ausgangsseitigen ammoniakhaltigen Flüssigkeit, ausgehend von der mindestens einen Basiskammer der Elektrodialyse-Zellstapels, **dadurch gekennzeichnet, dass** der pH-Wert in der/den Basenkammer(n) bei mindestens 10.0 gehalten wird.

2. Verfahren gemäß Anspruch 1, **dadurch gekennzeichnet, dass** der pH-Wert in der/den Basenkammer(n) bei mindestens 10,3 gehalten wird, vorzugsweise im Bereich von 10,3 bis 12,0.

3. Verfahren gemäß einem der vorhergehenden Ansprüche, wobei der Elektrodialyse-Zellstapel mindestens vier Kammern umfasst, die durch sich abwechselnde bipolare und anionische Membranen voneinander getrennt sind.

4. Verfahren gemäß Anspruch 3, wobei jede der anionischen Membranen eine Basenkammer von einer Säurekammer trennt.

5. Verfahren gemäß Anspruch 4, wobei es weiterhin den Schritt des Erhaltens einer ausgangsseitigen salzsäurehaltigen Flüssigkeit umfasst, ausgehend von der Säurekammer.

6. Verfahren gemäß einem beliebigen der vorhergehenden Ansprüche, wobei die ammoniumchloridhaltige wässrige Lösung zusätzlich Natriumchlorid enthält.

7. Verfahren gemäß einem der vorhergehenden Ansprüche, wobei es sich bei der ammoniumchloridhaltigen wässrigen Lösung um die Mutterlauge handelt, welche in einem Ammoniak-Soda-Verfahren nach dem Abfiltrieren des Natriumhydrogencarbonats anfällt.

8. Verfahren gemäß einem der vorhergehenden Ansprüche, wobei es weiterhin den Schritt des Einleitens des Ammoniaks aus der ausgangsseitigen Flüssigkeit in ein Ammoniak-Soda-Verfahren umfasst.

9. Verfahren gemäß Anspruch 8, wobei es weiterhin den Schritt des Auflösens von Natriumchlorid in der ausgangsseitigen Flüssigkeit, welche Ammoniak und nicht umgesetztes Natriumchlorid enthält, und des Einleitens der auf diese Weise erhaltenen Ammoniaklauge in ein Ammoniak-Soda-Verfahren umfasst.

10. Verfahren gemäß einem beliebigen der Ansprüche 5 bis 9, wobei es weiterhin den Schritt des Umsetzens der Salzsäure, die in der Säurekammer erzeugt wurde, mit Kalkstein umfasst, um Kohlendioxid zu erhalten.

11. Verfahren gemäß Anspruch 10, wobei das Kohlendioxid in ein Ammoniak-Soda-Verfahren eingeleitet wird, möglicherweise zusammen mit zusätzlichem Kohlendioxid aus externen Quellen.

12. Verfahren zur Herstellung von Natriumcarbonat mittels eines Ammoniak-Soda-Verfahrens, wobei es den Schritt des Herstellens von Ammoniak mittels des Verfahrens gemäß einem beliebigen der Ansprüche 1 bis 7 umfasst.

13. Verfahren gemäß Anspruch 12, wobei der hergestellte Ammoniak wieder in das Ammoniak-Soda-Verfahren eingeleitet wird, möglicherweise nach dem Auflösen von Natriumchlorid in der ausgangsseitigen Flüssigkeit, welche Ammoniak und nicht umgesetztes Natriumchlorid enthält.

14. Verfahren gemäß Anspruch 12 oder 13, wobei die Salzsäure, welche in der Säurekammer erzeugt wurde, mit Kalkstein umgesetzt wird, um Kohlendioxid zu erhalten.

15. Verfahren gemäß Anspruch 14, wobei das Kohlendioxid wieder in das Ammoniak-Soda-Verfahren eingeleitet wird, möglicherweise zusammen mit zusätzlichem Kohlendioxid aus externen Quellen.

## Revendications

1. Procédé de production d'ammoniac, comprenant les étapes d'alimentation d'une solution aqueuse contenant du chlorure d'ammonium dans au moins une chambre de base d'un empilement de cellules d'électrodialyseur et d'obtention d'un liquide de sortie contenant de l'ammoniac depuis l'au moins une chambre de base de l'empilement de cellules d'électrodialyseur, **caractérisé en ce que** le pH dans la ou les chambre(s) de base est maintenu égal ou supérieur à 10,0.

2. Procédé selon la revendication 1, **caractérisé en ce que** le pH dans la ou les chambre (s) de base est maintenu égal ou supérieur à 10,3, de préférence dans la plage entre 10,3 et 12,0.

3. Procédé selon l'une des revendications précédentes, dans lequel l'empilage de cellules d'électrodialyseur comprend au moins quatre chambres étant séparées les unes des autres par des membranes bipolaires et anioniques alternées.

4. Procédé selon la revendication 3, dans laquelle chaque membrane anionique sépare une chambre de base d'une chambre d'acide.

5. Procédé selon la revendication 4, comprenant l'étape supplémentaire d'obtention d'un liquide de sortie contenant de l'acide chlorhydrique à partir de la chambre d'acide.

6. Procédé selon l'une des revendications précédentes, dans lequel la solution aqueuse contenant du chlorure d'ammonium contient en outre du chlorure de sodium.

7. Procédé selon l'une des revendications précédentes, dans lequel la solution aqueuse contenant du chlorure d'ammonium est la liqueur mère obtenue après la filtration de bicarbonate de sodium dans un procédé au carbonate de soude.

8. Procédé selon l'une des revendications précédentes, comprenant l'étape supplémentaire d'introduction de l'ammoniac provenant du liquide de sortie dans un procédé au carbonate de soude.

9. Procédé selon la revendication 8, comprenant l'étape supplémentaire de dissolution de chlorure de sodium dans le liquide de sortie contenant de l'ammoniac et du chlorure de sodium non converti et introduction de la saumure d'ammoniac obtenue ainsi dans un procédé au carbonate de soude.

10. Procédé selon l'une quelconque des revendications 5 à 9, comprenant l'étape supplémentaire de réaction de l'acide chlorhydrique produit dans la chambre d'acide avec de la chaux pour obtenir du dioxyde de carbone.

11. Procédé selon la revendication 10, dans lequel le dioxyde de carbone est introduit dans un procédé au carbonate de soude, facultativement, conjointement avec du dioxyde de carbone additionnel provenant de sources externes.

12. Procédé de production de carbonate de sodium par un procédé au carbonate de soude, comprenant l'étape de production d'ammoniac par le procédé selon l'une quelconque des revendications 1 à 7.

13. Procédé selon la revendication 12, dans lequel l'ammoniac produit est réintroduit dans le procédé au carbonate de soude, facultativement après dissolution de chlorure de sodium dans le liquide de sortie contenant de l'ammoniac et du chlorure de sodium non converti.

14. Procédé selon la revendication 12 ou 13, dans lequel l'acide chlorhydrique produit dans la chambre d'acide réagit avec la chaux pour obtenir du dioxyde de carbone.

15. Procédé selon la revendication 14, dans lequel le dioxyde de carbone est réintroduit dans le procédé au carbonate de soude, facultativement, conjointement avec des sources externes de forme de dioxyde de carbone additionnelles.
